# EUROPÄISCHE PATENTANMELDUNG

(11) **EP 3 902 127 A1**
(43) Veröffentlichungstag der Anmeldung: **27.10.2021**
(21) Anmeldenummer: 21168764.5
(22) Anmeldetag: 16.04.2021
(51) Int. Cl.: H02M 1/00, H02M 7/493

(54) **LEISTUNGSWANDLER MIT SERIELL VERSCHALTETEN UND ALTERNIEREND BETRIEBEN MODULEN**

(30) Priorität: 22.04.2020 DE 102020205078
(71) Anmelder: Robert Bosch GmbH, 70442 Stuttgart (DE)
(72) Erfinder: Bura, Dennis, 71272 Renningen (DE)

(57) **Zusammenfassung**

Der hier vorgestellte Ansatz betrifft eine Wandlervorrichtung (105) für eine Leistungselektronik. Die Wandlervorrichtung (105) weist eine Eingangsschnittstelle (110), eine Ausgangsschnittstelle (115), eine erste Wandlereinheit (120) und eine zweite Wandlereinheit (125) auf. Die Eingangsschnittstelle (110) ist zum Bereitstellen einer Eingangsspannung und die Ausgangsschnittstelle (115) ist zum Bereitstellen einer Ausgangsspannung ausgebildet. Die erste Wandlereinheit (120) und die zweite Wandlereinheit (125) sind zum Wandeln der Eingangsspannung in die Ausgangsspannung ausgebildet und zwischen die Eingangsschnittstelle (110) und Ausgangsschnittstelle (115) geschaltet. Die erste Wandlereinheit (120) und die zweite Wandlereinheit (125) sind eingangsseitig und/oder ausgangsseitig in Reihe geschaltet.

## Beschreibung

### Stand der Technik

Der Ansatz geht von einer Vorrichtung oder einem Verfahren nach Gattung der unabhängigen Ansprüche aus.

Die DE 10 2017 115 000 A1 beschreibt eine Photovoltaikeinheit, bei der im Teillastbetrieb einzelne Wechselrichter einer Mehrzahl parallel geschalteter Wechselrichter ausgeschaltet werden können, um den Wirkungsgrad zu erhöhen.

Eine Modulabschaltung ist bei Reihenschaltung von Wechselrichtermodulen im herkömmlichen Betrieb nicht möglich.

### Offenbarung der Erfindung

Vor diesem Hintergrund werden mit dem hier vorgestellten Ansatz eine Wandlervorrichtung für eine Leistungselektronik, ferner ein elektrisches System mit einer Wandlervorrichtung sowie ein Verfahren zum Betreiben einer Wandlervorrichtung gemäß den Hauptansprüchen vorgestellt. Durch die in den abhängigen Ansprüchen aufgeführten Maßnahmen sind vorteilhafte Weiterbildungen und Verbesserungen der im unabhängigen Anspruch angegebenen Vorrichtung möglich.

Die mit dem vorgestellten Ansatz erreichbaren Vorteile bestehen darin, dass eine besonders kostengünstig realisierbare Wandlervorrichtung geschaffen werden kann, die dennoch einen hohen Wirkungsgrad erzielen kann.

Eine Wandlervorrichtung für eine Leistungselektronik weist eine Eingangsschnittstelle, eine Ausgangsschnittstelle, eine erste Wandlereinheit und eine zweite Wandlereinheit auf. Die Eingangsschnittstelle ist zum Bereitstellen einer Eingangsspannung und die Ausgangsschnittstelle ist zum Bereitstellen einer Ausgangsspannung ausgebildet. Die erste Wandlereinheit und die zweite Wandlereinheit sind zum Wandeln der Eingangsspannung in die Ausgangsspannung ausgebildet und zwischen die Eingangsschnittstelle und Ausgangsschnittstelle geschaltet. Die erste Wandlereinheit und die zweite Wandlereinheit sind eingangsseitig und zusätzlich oder alternativ ausgangsseitig in Reihe geschaltet.

Die Wandervorrichtung eignet sich für Einsatzgebiete in denen eine Spannungs- und/oder Stromwandlung erforderlich ist. Lediglich beispielhaft ist der Einsatz in einem Steckernetzteil, einem Ladegerät, einer modular aufgebauten Leistungselektronik, einer Maschine oder einem Fahrzeug genannt. Gemäß einer Ausführungsform können die Wandlereinheiten alternierend betrieben werden. Durch ein solches schnelles Abwechseln wird eine Modulabschaltung auch bei Reihenschaltung von Wechselrichtermodulen möglich.

Die Wandlervorrichtung kann verwendet werden, um die Eingangsspannung in die Ausgangsspannung zu wandeln. Dabei kann die Ausgangsspannung beispielsweise eine sich von der Eingangsspannung unterscheidende Frequenz und/oder Amplitude aufweisen. Bei den Wandlereinheiten kann es sich um zwei getrennte und in sich abgeschlossene Einheiten handeln. Alternativ können die Wandereinheiten zusammen in einem gemeinsamen Gehäuse angeordnet sein. Beispielsweise können die Wandlereinheiten als zwei Leistungselektroniken ausgeführt sein, die auf geeignete Weise miteinander verschaltet sind und gemeinsam betrieben werden. Für den korrekten Betrieb einer solchen Verschaltung kann ein Filter am Eingang und Ausgang vorgesehen sein. Zudem können die Wandereinheiten unter Verwendung einer gemeinsamen Steuereinheit betrieben werden. Die Wandlervorrichtung, und somit auch die Wandlereinheiten, kann als ein Gleichspannungswandler, Netzteil, Wechselrichter oder Umrichter ausgeformt sein. Als Gleichspannungswandler kann die Wandlervorrichtung dazu ausgebildet sein, um eine Gleichspannung zu reduzieren oder zu erhöhen. Als Umrichter kann die Wandlervorrichtung dazu ausgebildet sein, um eine Wechselspannung zu reduzieren oder zu erhöhen. Als Netzteil kann die Wandlervorrichtung dazu ausgebildet sein, um eine Wechselspannung in eine Gleichspannung umzuwandeln. Als Wechselrichter kann die Wandlervorrichtung dazu ausgebildet sein, um eine Gleichspannung in eine Wechselspannung umzuwandeln. Bei der Wandlervorrichtung kann es sich beispielsweise um eine Leistungselektronik für ein Ladegerät für ein Fahrzeug, beispielsweise für ein E-Bike, also ein Elektrofahrrad, handeln. Es kann sich bei der Wandlervorrichtung aber auch um eine beliebige andere Leistungselektronik für das E-Bike oder ein beliebiges anderes Fahrzeug oder ein anderes Gerät handeln. Dank der Reihenschaltung der Wandlereinheiten können diese beispielsweise unabhängig voneinander betrieben werden und es kann so bei hohen Eingangsspannungen im Betrieb der Wandlervorrichtung eine Spannungsbelastung der einzelnen Wandlereinheiten reduziert werden und dennoch die angeforderte Ausgansspannung zuverlässig bereitgestellt werden. Es ist hierdurch vorteilhafterweise ein Einsatz von günstigen Bauteilen mit einer geringen Maximalspannung ermöglicht.

Die erste Wandlereinheit und die zweite Wandlereinheit können gemäß einer Ausführungsform eingangsseitig und ausgangsseitig in Reihe geschaltet sein. Eine eingangsseitige und ausgangsseitige Reihenschaltung ermöglicht es, dynamisch zwischen den Wandlereinheiten umzuschalten, also beispielsweise nur eine der Wandlereinheiten temporär zu betreiben und die andere Wandlereinheit beispielsweise zumindest temporär abzuschalten. Sowohl durch diese als auch durch die anderen Verschaltungsmöglichkeiten kann ein Teillastwirkungsgrad verbessert werden.

Alternativ können die erste Wandlereinheit und die zweite Wandlereinheit aber auch eingangsseitig in Reihe geschaltet und ausgangsseitig parallelgeschaltet sein. Durch diese und die anderen genannten Verschaltkombinationen kann eine geringere Welligkeit des Ausgangsstroms bewirkt werden, solange beide Wandlereinheiten gleichzeitig arbeiten und ihre PWM-Muster um 180° verschoben sind. Bei einer eingangsseitigen Reihenschaltung wird die Spannungsbelastung der Bauteile eingangsseitig reduziert. Alternativ kann die Eingangsspannung größer gewählt werden. Auch können die erste Wandlereinheit und die zweite Wandlereinheit eingangsseitig parallel geschaltet und ausgangsseitig in Reihe geschaltet sein.

Gemäß einer Ausführungsform kann die Eingangsschnittstelle einen ersten Eingangsspannungsanschluss und einen zweiten Eingangsspannungsanschluss zum Bereitstellen der Eingangsspannung aufweisen, und die Ausgangsschnittstelle einen ersten Ausgangsspannungsanschluss und einen zweiten Ausgangsspannungsanschluss zum Bereitstellen der Ausgangsspannung aufweisen. Die erste Wandlereinheit kann einen ersten Wandlereingangsanschluss und einen weiteren ersten Wandlereingangsanschluss aufweisen und die zweite Wandlereinheit kann einen zweiten Wandlereingangsanschluss und einen weiteren zweiten Wandlereingangsanschluss aufweisen.

Der erste Wandlereingangsanschluss kann mit dem ersten Eingangsspannungsanschluss und der weitere zweite Wandlereingangsanschluss kann mit dem zweiten Eingangsspannungsanschluss elektrisch leitfähig verbunden sein. Der weitere erste Wandlereingangsanschluss kann mit dem zweiten Wandlereingangsanschluss elektrisch leitfähig verbunden sein. Zwischen dem ersten Wandlereingangsanschluss und dem weiteren ersten Wandlereingangsanschluss kann ein erster Zwischenkreiskondensator und zwischen dem zweiten Wandlereingangsanschluss und dem weiteren zweiten Wandlereingangsanschluss kann ein weiterer erster Zwischenkreiskondensator elektrisch kontaktiert sein. So kann eine funktionsfähige eingangsseitige Reihenschaltung für die Wandlervorrichtung realisiert sein.

Bei einer eingangsseitigen Parallelschaltung können der erste Wandlereingangsanschluss und der weitere erste Wandlereingangsanschluss mit dem ersten Eingangsspannungsanschluss elektrisch leitfähig verbunden sein. Entsprechend können der zweite Wandlereingangsanschluss und der weitere zweite Wandlereingangsanschluss mit dem zweiten Eingangsspannungsanschluss elektrisch leitfähig verbunden sein.

Die erste Wandlereinheit kann einen ersten Wandlerausgangsanschluss und einen weiteren ersten Wandlerausgangsanschluss aufweisen und die zweite Wandlereinheit kann einen zweiten Wandlerausgangsanschluss und einen weiteren zweiten Wandlerausgangsanschluss aufweisen. Dabei kann der erste Wandlerausgangsanschluss mit dem ersten Ausgangsspannungsanschluss und der weitere zweite Wandlerausgangsanschluss mit dem zweiten Ausgangsspannungsanschluss elektrisch leitfähig verbunden sein. Der weitere erste Wandlerausgangsanschluss kann mit dem zweiten Wandlerausgangsanschluss elektrisch leitfähig verbunden sein. Zwischen dem ersten Wandlerausgangsanschluss und dem weiteren ersten Wandlerausgangsanschluss kann ein zweiter Zwischenkreiskondensator und zwischen dem zweiten Wandlerausgangsanschluss und dem weiteren zweiten Wandlerausgangsanschluss kann ein weiterer zweiter Zwischenkreiskondensator elektrisch kontaktiert sein. So kann eine funktionsfähige ausgangsseitige Reihenschaltung für die Wandlervorrichtung realisiert sein.

Alternativ zu der ausgangsseitigen Reihenschaltung kann die erste Wandlereinheit aber auch einen ersten Wandlerausgangsanschluss und einen weiteren ersten Wandlerausgangsanschluss aufweisen und die zweite Wandlereinheit kann einen zweiten Wandlerausgangsanschluss und einen weiteren zweiten Wandlerausgangsanschluss aufweisen. Der erste Wandlerausgangsanschluss und der zweite Wandlerausgangsanschluss können mit dem ersten Ausgangsspannungsanschluss elektrisch leitfähig verbunden sein. Der weitere erste Wandlerausgangsanschluss und der weitere zweite Wandlerausgangsanschluss können mit dem zweiten Ausgangsspannungsanschluss elektrisch leitfähig verbunden sein. Zusätzlich oder alternativ kann zwischen dem ersten Ausgangsspannungsanschluss und dem zweiten Ausgangsspannungsanschluss ein zusätzlicher Zwischenkreiskondensator elektrisch kontaktiert sein. So kann eine funktionsfähige ausgangsseitige Parallelschaltung für die Wandlervorrichtung realisiert sein.

Es ist weiterhin von Vorteil, wenn die Wandlervorrichtung gemäß einer beispielhaften Ausführungsform eine Steuereinrichtung aufweist, die dazu ausgebildet ist, um die erste Wandlereinheit und die zweite Wandlereinheit alternierend zu betreiben. So kann bei Teillast vom kontinuierlichen Betrieb in den alternierenden Betrieb der Wandlereinheiten gewechselt werden.

Die Steuereinrichtung kann hierbei dazu ausgebildet sein, um die erste Wandlereinheit und die zweite Wandlereinheit alternierend zu deaktivieren und zu aktivieren. So können die Wandlervorrichtungen abwechselnd betrieben werden.

Die Steuereinrichtung kann ferner dazu ausgebildet sein, um die erste Wandlereinheit und die zweite Wandlereinheit alternierend mit einer Umschaltfrequenz zu betreiben, die kleiner ist, als eine Betriebsfrequenz der Wandlereinheiten. Als die Betriebsfrequenz kann eine Schaltfrequenz der Transistoren der Wandlereinheiten verstanden werden. Dies kann dazu dienen, dass die Wandlereinheiten ihren eingeschwungenen Zustand erreichen und eine gewisse Zeit lang arbeiten können.

Es ist weiterhin von Vorteil, wenn die Steuereinrichtung dazu ausgebildet ist, um die erste Wandlereinheit und die zweite Wandlereinheit alternierend mit einer Überlappungszeit zu betreiben. So können die erste Wandlereinheit und die zweite Wandlereinheit temporär gleichzeitig aktiv sein, beispielsweise kurzzeitig zwischen einer Alternation. Bei der Überlappungszeit kann es sich beispielsweise um einen Zeitraum zwischen 0 bis 1 ms oder auch nur ein paar Nanosekunden oder Mikrosekunden handeln, abhängig von der Schaltfrequenz der Wandler. Eine solche Überlappungszeit kann vorteilhaft sein, wenn die Wandlereinheiten eine längere Anlaufzeit benötigen.

Die Wandlervorrichtung kann ferner zumindest eine dritte Wandlereinheit aufweisen, die zum Wandeln der Eingangsspannung in die Ausgangsspannung zwischen die Eingangsschnittstelle und Ausgangsschnittstelle geschaltet ist, wobei die dritte Wandlereinheit, erste Wandlereinheit und zweite Wandlereinheit eingangsseitig und zusätzlich oder alternativ ausgangsseitig in Reihe geschaltet sind. Die Wandlervorrichtung kann auch eine beliebige Anzahl weiterer Wandlereinheiten aufweisen, die dementsprechend angeordnet sind. Eine Vielzahl von Wandlereinheiten ermöglicht eine weitere Verbesserung des Teillastwirkungsgrads und der Spannungsbelastung.

Ein elektrisches System weist eine Wandlervorrichtung in einer der vorangehend beschriebenen Varianten, eine elektrische Quelle, beispielsweise einer Spannungsquelle oder einer Stromquelle, und einer elektrischen Senke, beispielsweise einer Spannungssenke oder Stromsenke auf, wobei die Spannungsquelle mit der Eingangsschnittstelle der Wandlervorrichtung elektrisch verbunden ist und der Verbraucher mit der Ausgangsschnittstelle der Wandlervorrichtung elektrisch verbunden ist. Die elektrische Quelle kann ausgebildet sein, um eine Eingangsleistung bereitzustellen und die elektrische Senke kann ausgebildet sein, um eine Ausgangsleistung zu verbrauchen. Beispielsweise kann die elektrische Quelle ausgebildet sein, um eine Eingangsspannung und/oder einen Eingangsstrom bereitzustellen und die elektrische Senke kann ausgebildet sein, um unter Verwendung einer Ausgangsspannung und/oder eines Ausgangsstroms betrieben zu werden. So kann ein funktionsfähiges elektrisches System, wie beispielsweise ein Fahrzeug mit einer als Fahrzeugbatterie ausgeformten Spannungsquelle und einem als Motor ausgeformten Verbraucher realisiert sein.

Es wird ferner ein Verfahren zum Betreiben einer der vorangehend beschriebenen Wandlervorrichtungen vorgestellt, bei dem die Wandlereinheiten alternierend betrieben werden.

Dieses Verfahren kann beispielsweise in Software oder Hardware oder in einer Mischform aus Software und Hardware beispielsweise in einem Steuergerät implementiert sein.

Ausführungsbeispiele des hier vorgestellten Ansatzes sind in den Zeichnungen dargestellt und in der nachfolgenden Beschreibung näher erläutert. Es zeigt:
Fig. 1 eine schematische Darstellung eines Fahrzeugs mit einem Blockschaltbild einer Wandlervorrichtung für eine Leistungselektronik des Fahrzeugs gemäß einem Ausführungsbeispiel;
Fig. 2 ein Blockschaltbild einer Wandlervorrichtung gemäß einem Ausführungsbeispiel; und
Fig. 3 ein Ablaufdiagramm eines Verfahrens zum Betreiben einer Wandlervorrichtung gemäß einem Ausführungsbeispiel.

In der nachfolgenden Beschreibung günstiger Ausführungsbeispiele des vorliegenden Ansatzes werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

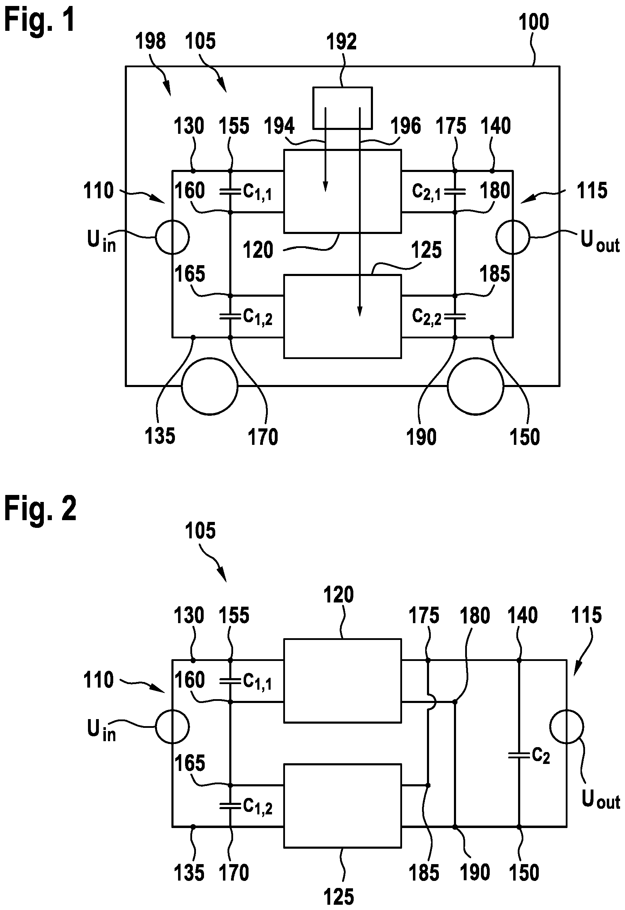

Fig. 1 zeigt eine schematische Darstellung eines Fahrzeugs 100 mit einem Blockschaltbild einer Wandlervorrichtung 105 für eine Leistungselektronik des Fahrzeugs 100 gemäß einem Ausführungsbeispiel.

Lediglich beispielhaft ist die Wandlervorrichtung 105 gemäß diesem Ausführungsbeispiel an oder in dem Fahrzeug 100 angeordnet, das gemäß diesem Ausführungsbeispiel als ein Personenkraftfahrzeug oder Lastkraftfahrzeug ausgeformt ist. Gemäß einem alternativen Ausführungsbeispiel ist die Wandlervorrichtung 105 für eine beliebige andere Leistungselektronik, wie beispielsweise ein Ladegerät, für beispielsweise ein E-Bike ausgeformt. Auch kann die Wandlervorrichtung 105 für andere, beispielsweise stationär betriebene Geräte, verwendet werden.

Die Wandlervorrichtung 105 weist eine Eingangsschnittstelle 110, eine Ausgangsschnittstelle 115, eine erste Wandlereinheit 120 und eine zweite Wandlereinheit 125 auf. Die Eingangsschnittstelle 110 ist zum Bereitstellen einer Eingangsspannung und die Ausgangsschnittstelle 115 ist zum Bereitstellen einer Ausgangsspannung ausgebildet. Die erste Wandlereinheit 120 und die zweite Wandlereinheit 125 sind zum Wandeln der Eingangsspannung in die Ausgangsspannung ausgebildet und zwischen die Eingangsschnittstelle 110 und Ausgangsschnittstelle 115 geschaltet. Die erste Wandlereinheit 120 und die zweite Wandlereinheit 125 sind eingangsseitig und/oder ausgangsseitig in Reihe geschaltet.

Die erste Wandlereinheit 120 und die zweite Wandlereinheit 125 sind gemäß diesem Ausführungsbeispiel eingangsseitig und ausgangsseitig in Reihe geschaltet. Alternativ können die erste Wandlereinheit 120 und die zweite Wandlereinheit 125 eingangsseitig parallel und ausgangsseitig in Reihe geschaltet sein.

Gemäß diesem Ausführungsbeispiel weist die Eingangsschnittstelle 110 einen ersten Eingangsspannungsanschluss 130 und einen zweiten Eingangsspannungsanschluss 135 zum Bereitstellen der Eingangsspannung auf. Dabei liegt die Eingangsspannung zwischen dem ersten Eingangsspannungsanschluss 130 und dem zweiten Eingangsspannungsanschluss 135 an. Die Ausgangsschnittstelle 115 weist einen ersten Ausgangsspannungsanschluss 140 und einen zweiten Ausgangsspannungsanschluss 150 zum Bereitstellen der Ausgangsspannung auf. Dabei liegt die Ausgangsspannung zwischen dem ersten Ausgangsspannungsanschluss 140 und dem zweiten Ausgangsspannungsanschluss 150 an.

Die erste Wandlereinheit 120 weist einen ersten Wandlereingangsanschluss 155 und einen weiteren ersten Wandlereingangsanschluss 160. Die zweite Wandlereinheit 125 weist einen zweiten Wandlereingangsanschluss 165 und einen weiteren zweiten Wandlereingangsanschluss 170 aufweist. Der erste Wandlereingangsanschluss 155 ist gemäß diesem Ausführungsbeispiel mit dem ersten Eingangsspannungsanschluss 130 und der weitere zweite Wandlereingangsanschluss 170 mit dem zweiten Eingangsspannungsanschluss 135 elektrisch leitfähig verbunden, und der weitere erste Wandlereingangsanschluss 160 ist mit dem zweiten Wandlereingangsanschluss 165 elektrisch leitfähig verbunden. Zwischen dem ersten Wandlereingangsanschluss 155 und dem weiteren ersten Wandlereingangsanschluss 160 ist ein erster Zwischenkreiskondensator C_{1,1} und zwischen dem zweiten Wandlereingangsanschluss 165 und dem weiteren zweiten Wandlereingangsanschluss 170 ist ein weiterer erster Zwischenkreiskondensator C_{1,2} elektrisch kontaktiert. Die an den Zwischenkreiskondensatoren C_{1,1}, C_{1,2} in Summe abfallende Spannung entspricht der Eingangsspannung.

Die erste Wandlereinheit 120 weist ferner gemäß diesem Ausführungsbeispiel einen ersten Wandlerausgangsanschluss 175 und einen weiteren ersten Wandlerausgangsanschluss 180 auf und die zweite Wandlereinheit 125 weist gemäß diesem Ausführungsbeispiel einen zweiten Wandlerausgangsanschluss 185 und einen weiteren zweiten Wandlerausgangsanschluss 190 auf. Der erste Wandlerausgangsanschluss 175 ist mit dem ersten Ausgangsspannungsanschluss 140 und der weitere zweite Wandlerausgangsanschluss 190 mit dem zweiten Ausgangsspannungsanschluss 150 elektrisch leitfähig verbunden. Der weitere erste Wandlerausgangsanschluss 180 ist mit dem zweiten Wandlerausgangsanschluss 185 elektrisch leitfähig verbunden. Zwischen dem ersten Wandlerausgangsanschluss 175 und dem weiteren ersten Wandlerausgangsanschluss 180 ist ein zweiter Zwischenkreiskondensator C_{2,1} und zwischen dem zweiten Wandlerausgangsanschluss 185 und dem weiteren zweiten Wandlerausgangsanschluss 190 ist ein weiterer zweiter Zwischenkreiskondensator C_{2,2} elektrisch kontaktiert. An den Zwischenkreiskondensatoren C_{2,1}, C_{2,2} fällt in Summe die Ausgangsspannung ab.

Ferner weist die Wandlervorrichtung 105 gemäß diesem Ausführungsbeispiel eine optionale Steuereinrichtung 192 auf, die dazu ausgebildet ist, um die erste Wandlereinheit 120 und die zweite Wandlereinheit 125 alternierend zu betreiben. Die Steuereinrichtung 192 ist hierbei gemäß diesem Ausführungsbeispiel dazu ausgebildet, um die erste Wandlereinheit 120 und die zweite Wandlereinheit 125 alternierend zu deaktivieren und zu aktivieren. Die Steuereinrichtung 192 ist beispielsweise dazu ausgebildet, um durch Ausgabe eines Deaktivierungssignals 194 an eine der Wandlereinheiten 120, 125 diese zu deaktivieren und durch Ausgabe eines Aktivierungssignals 196 an die andere der Wandlereinheiten 120, 125 diese zu aktivieren. Gemäß diesem Ausführungsbeispiel ist die Steuereinrichtung 192 dazu ausgebildet, um die das Deaktivierungssignal 194 an die eine der Wandlereinheiten 120, 125 und das Aktivierungssignal 196 an die andere der Wandlereinheiten 120, 125 gleichzeitig oder überlappend auszugeben. Die Steuereinrichtung 192 ist gemäß einem Ausführungsbeispiel dazu ausgebildet, um die erste Wandlereinheit 120 und die zweite Wandlereinheit 125 alternierend mit einer Umschaltfrequenz zu betreiben, die kleiner ist, als eine Betriebsfrequenz der Wandlereinheiten 120, 125. Als die Betriebsfrequenz kann eine Schaltfrequenz der Transistoren der Wandlereinheiten verstanden werden. Weiterhin ist die Steuereinrichtung 192 gemäß einem Ausführungsbeispiel dazu ausgebildet, um die erste Wandlereinheit 120 und die zweite Wandlereinheit 125 alternierend mit einer Überlappungszeit zu betreiben. Somit entspricht die Ausgangsspannung während einer ersten Zeitdauer, in der nur die erste Wandlereinheit 120 aktiv ist, der von der ersten Wandlereinheit 120 bereitgestellten Spannung und während einer zweiten Zeitdauer, in der nur die zweite Wandlereinheit 125 aktiv ist, der von der zweiten Wandlereinheit 125 bereitgestellten Spannung.

Je nach Anwendungsfall können die Zwischenkreiskondensatoren C_{1,1}, C_{1,2}, C_{2,1}, C_{2,2} durch andere geeignete Elemente ersetzt oder ergänzt werden.

Gemäß einem alternativen Ausführungsbeispiel weist die Wandlervorrichtung 105 zumindest eine dritte Wandlereinheit auf, die zum Wandeln der Eingangsspannung in die Ausgangsspannung zwischen die Eingangsschnittstelle 110 und Ausgangsschnittstelle 115 geschaltet ist, wobei die dritte Wandlereinheit, die erste Wandlereinheit 120 und die zweite Wandlereinheit 125 eingangsseitig und/oder ausgangsseitig in Reihe geschaltet sind. Die Wandlervorrichtung 105 weist gemäß einem Ausführungsbeispiel ferner eine beliebige Anzahl weiterer derartiger Wandlereinheiten auf, die dementsprechend angeordnet sind.

Die Wandlervorrichtung 105 ist gemäß unterschiedlichen Ausführungsbeispiele als ein DC-DC-Wandler, AC-DC-Wandler, DC-AC-Wandler oder AC-AC-Wandler ausgeformt. Gemäß einem Ausführungsbeispiel ist die Wandlervorrichtung 105 Teil eines Netzteils eines elektrischen Geräts. In Form eines Gleichspannungswandlers sind die Wandlereinheiten 120, 125 gemäß einem Ausführungsbeispiel dazu ausgebildet, um eine anliegende Gleichspannung zu reduzieren oder zu erhöhen. In Form eines Umrichters sind die Wandlereinheiten 120, 125 gemäß einem Ausführungsbeispiel dazu ausgebildet, um eine anliegende Wechselspannung zu reduzieren oder zu erhöhen. In Form eines Netzteils sind die Wandlereinheiten 120, 125 gemäß einem Ausführungsbeispiel dazu ausgebildet, um eine Wechselspannung in eine Gleichspannung umzuwandeln. In Form eines Wechselrichters sind die Wandlereinheiten 120, 125 gemäß einem Ausführungsbeispiel dazu ausgebildet, um eine Gleichspannung in eine Wechselspannung umzuwandeln.

Gemäß diesem Ausführungsbeispiel weist beispielhaft ein hier gezeigtes elektrisches System 198 die Wandlervorrichtung 105, eine elektrische Quelle, beispielweise eine Spannungsquelle Uᵢₙ zum Bereitstellen der Eingangsspannung und eine elektrische Senke auf, beispielsweise einen elektrischen Verbraucher Uₒᵤₜ, der unter Verwendung der Ausgangsspannung betrieben werden kann. Die Spannungsquelle Uᵢₙ ist mit der Eingangsschnittstelle 110 der Wandlervorrichtung 105 elektrisch verbunden. Der Verbraucher Uₒᵤₜ ist mit der Ausgangsschnittstelle 115 der Wandlervorrichtung 105 elektrisch verbunden. Die Spannungsquelle Uᵢₙ stellt beispielsweise eine Batterie und der Verbraucher Uₒᵤₜ einen Elektromotor dar.

Die hier vorgestellte Wandlervorrichtung 105 ermöglicht vorteilhafterweise eine Teillast-optimale Reihenschaltung von Wandlereinheiten 120, 125, die auch als Wandler oder Module bezeichnet werden können.

Durch eine eingangs- und ausgangsseitige Parallelschaltung mehrerer Gleichspannungswandler können sich mehrere Vorteile wie z. B. höhere Ausgangsleistungen und unter Umständen eine geringere Welligkeit eines Ausgangs- und Eingangsstroms. Durch ein Abschalten einzelner Wandler(-module) kann zudem der Teillastwirkungsgrad verbessert werden.

Bei höheren Eingangs- und/oder Ausgangsspannungen kann allerdings eine Reihenschaltung der Wandlereinheiten 120, 125 vorteilhafter sein, da dadurch die Spannungsbelastung der einzelnen Wandler reduziert wird und unter Umständen günstigere Bauteile mit einer geringeren Maximalspannung eingesetzt werden können. Bei der Reihenschaltung von Wandlereinheiten 120, 125 wäre es allerdings von Nachteil, einen einzelnen Wandler dauerhaft abzuschalten. Dadurch würde sich nämlich der Zwischenkreiskondensator C_{1,1}, C_{1,2}, der auch als Eingangskondensator bezeichnet werden kann, der aktiven Wandlereinheit 120, 125 immer weiter entladen, bis dieser nicht mehr arbeiten könnte. Eine entsprechende Modulabschaltung wird bei Reihenschaltung durch schnelles abwechseln möglich.

Fig. 1 zeigt eine vollständige Seriellschaltung zweier Wandlereinheiten 120, 125 und Fig. 2 eine mögliche Mischform. Anders ausgedrückt zeigt Fig. 1 eine Seriell-Seriell-Schaltung und Fig. 2 eine Seriell-Parallel-Schaltung von zwei Wandlereinheiten 120, 125 in Form von beispielsweise DC-DC-Wandlern.

Gemäß diesem Ausführungsbeispiel wird durch eine alternierende Betriebsstrategie die Reihenschaltung von DC-DC Wandler-Modulen ermöglicht. Anstatt einzelne Wandlereinheiten 120, 125 längere Zeit oder dauerhaft abzuschalten, wird gemäß diesem Ausführungsbeispiel durch die Steuereinrichtung 192 dynamisch zwischen diesen umgeschaltet. D. h., die erste und zweite Wandlereinheit 120, 125 laufen/arbeiten gemäß einem Ausführungsbeispiel beide wechselseitig und nicht gleichzeitig. Eine Umschaltung erfolgt gemäß einem Ausführungsbeispiel langsamer als die Betriebsfrequenz der DC-DC Wandler. Die Zwischenkreiskondensatoren C_{1,1}, C_{1,2}, C_{2,1} und C_{2,2} an den seriell verschalteten Ein- und Ausgängen sind gemäß diesem Ausführungsbeispiel für diese niedrigere Frequenz ausgelegt. Durch diese Betriebsstrategie sind die Vorteile von parallel geschalteten Wandlereinheiten 120, 125 auch für Reihenschaltungen oder Mischformen einsetzbar.

Die hier vorgestellte Wandlervorrichtung 105 zeichnet sich beispielsweise durch einen sehr guten Teillastwirkungsgrad des Gesamtsystems aus. Zudem sind durch die geringere Spannungsbelastung im Vergleich zur Parallelschaltung unter Umständen günstigere Bauteile einer niedrigeren Spannungskategorie verwendbar. Bei DC-DC Wandlern, die keine oder nur eine geringe Variation der Ausgangsleistung ermöglichen, wie z. B. Klasse E/F basierte Wandler oder resonante SEPIC(single ended primary inductance converter)-Topologien, ist durch den alternierenden Betrieb der Wandler die Ausgangsleistung effizient auf die Hälfte reduzierbar. Bei DC-DC Wandlern, die keine oder nur eine geringe Variation der Ausgangsleistung ermöglichen, wie z. B. Klasse E/F basierte Wandler oder resonante SEPIC-Topologien, wirken sich Bauteilschwankungen üblicherweise auf die Ausgangsleistung aus. Durch einen alternierenden Betrieb mit einem von gemäß einem Ausführungsbeispiel 50 % verschiedenen Tastgrad können beide Wandlermodule die gleiche Ausgangsleistung liefern und sind somit wieder symmetrisch belastbar.

Das zuvor erwähnte Entladen der Eingangskondensatoren macht es unmöglich, bei einer Serienschaltung von Wandlern einen oder mehrere Wandler dauerhaft abzuschalten. Um dennoch einen besseren Teillastwirkungsgrad des Gesamtsystems zu erreichen, werden gemäß diesem Ausführungsbeispiel die zwei Wandlereinheiten 120, 125 wechselseitig ein- und ausgeschaltet. Dies geschieht gemäß einem Ausführungsbeispiel mit einer festen Frequenz oder gemäß einem alternativen Ausführungsbeispiel nicht mit einer festen Frequenz. Die Frequenz, mit der umgeschaltet wird, ist gemäß einem Ausführungsbeispiel kleiner als die Arbeitsfrequenz der einzelnen Wandler, damit diese ihren eingeschwungenen Zustand erreichen können und eine gewisse Zeit lang arbeiten können. Eine gemäß einem Ausführungsbeispiel kurzzeitige Überlappung der Einschaltbereiche kann zudem vorteilhaft sein, falls die Wandler eine längere Anlaufzeit benötigen. Das beschriebene Konzept ist auf beliebig viele Wandler die eingangs- und/oder ausgangsseitig in Reihe geschaltet sind, erweiterbar. Bei N Wandlern können dann beispielsweise von der Steuereinrichtung 192 einer bis N-1 Wandler wechselseitig abgeschaltet werden. Die Verwendung mehrerer Wandler ermöglicht eine weitere Verbesserung des Teillastwirkungsgrades oder der Spannungsbelastung. Des Weiteren ist das vorgestellte Konzept nicht auf reine DC-DC Wandler begrenzt. Das Konzept wird gemäß unterschiedlichen Ausführungsbeispielen auch bei Netzteilen, Wechselrichtern und Umrichtern (AC-DC, DC-AC, AC-AC) angewendet.

Mögliche Einsatzmöglichkeiten sind beispielsweise ein Lader eines E-Bikes oder allgemein modular aufgebaute Leistungselektroniken.

Fig. 2 zeigt ein Blockschaltbild einer Wandlervorrichtung 105 gemäß einem Ausführungsbeispiel. Die Wandlervorrichtung 105 kann sich von der anhand von Fig. 1 beschriebenen Wandlervorrichtung 105 dahingehend unterscheiden, dass die erste Wandlereinheit 120 und die zweite Wandlereinheit 125 gemäß diesem Ausführungsbeispiel ausgangsseitig parallelgeschaltet sind. Die Wandlervorrichtung 105 weist entsprechend zu Fig. 1 die Eingangsschnittstelle 110 und die Ausgangsschnittstelle 115 auf.

Die erste Wandlereinheit 120 weist gemäß diesem Ausführungsbeispiel auch den ersten Wandlerausgangsanschluss 175 und den weiteren ersten Wandlerausgangsanschluss 180 auf und die zweite Wandlereinheit 125 den zweiten Wandlerausgangsanschluss 185 und den weiteren zweiten Wandlerausgangsanschluss 190 auf. Der erste Wandlerausgangsanschluss 175 und der zweite Wandlerausgangsanschluss 185 sind gemäß diesem Ausführungsbeispiel mit dem ersten Ausgangsspannungsanschluss 140 elektrisch leitfähig verbunden, und der weitere erste Wandlerausgangsanschluss 180 und der weitere zweite Wandlerausgangsanschluss 190 sind gemäß diesem Ausführungsbeispiel mit dem zweiten Ausgangsspannungsanschluss 150 elektrisch leitfähig verbunden. Zwischen dem ersten Ausgangsspannungsanschluss 140 und dem zweiten Ausgangsspannungsanschluss 150 ist gemäß diesem Ausführungsbeispiel ein zusätzlicher Zwischenkreiskondensator C₂ elektrisch kontaktiert.

Gemäß einem alternativen Ausführungsbeispiel sind die Wandlereinheiten 120, 125 entsprechend der obenstehenden Beschreibung eingangsseitig parallelgeschaltet und wie in Fig. 1 beschrieben ausgangsseitig in Reihe geschaltet.

Wie anhand von Fig. 1 beschrieben kann eine Steuereinrichtung 192 zum Steuern der Wandlereinheiten 120, 125 vorgesehen sein.

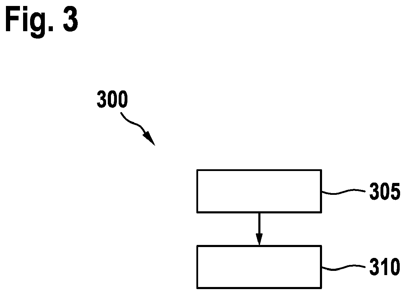

Fig. 3 zeigt ein Ablaufdiagramm eines Verfahrens 300 zum Betreiben einer Wandlervorrichtung gemäß einem Ausführungsbeispiel. Dabei kann es sich um eine der in Fig. 1 oder 2 beschriebenen Wandlervorrichtungen handeln.

Das Verfahren 300 ist gemäß einem Ausführungsbeispiel von der in Fig. 1 beschriebenen Steuereinrichtung durchführbar oder ansteuerbar.

Bei dem Verfahren 300 werden die Wandlereinheiten der Wandlervorrichtung alternierend betrieben. Hierzu wird gemäß einem Ausführungsbeispiel in einem ersten Schritt 305 ein Aktivierungssignal zum Aktivieren eines Betriebs der ersten Wandlereinheit an die erste Wandlereinheit oder zum Aktivieren eines Betriebs der zweiten Wandlereinheit an die zweite Wandlereinheit ausgegeben. Im ersten Schritt 305 wird gemäß einem Ausführungsbeispiel das Aktivierungssignal alternierend an die erste und die zweite Wandlereinheit ausgegeben. In einem optionalen zweiten Schritt 310 wird gemäß einem Ausführungsbeispiel ein Deaktivierungssignal zum Deaktivieren eines Betriebs der ersten Wandlereinheit an die erste Wandlereinheit oder zum Deaktivieren eines Betriebs der zweiten Wandlereinheit an die zweite Wandlereinheit ausgegeben.

Die Schritte 305, 310 erfolgen gemäß einem Ausführungsbeispiel gleichzeitig oder überlappend. Somit kann ein gegensätzliches alternierendes Aktivieren und Deaktivieren der Wandereinheiten durchgeführt werden.

Somit können die folgenden Zustände realisiert werden:

| | erste Wandlereinheit | zweite Wandlereinheit |
|---|---|---|
| Zustand 1: | ein | ein |
| Zustand 2: | ein | aus |
| Zustand 3: | aus | ein |
| Zustand 4: | aus | aus |

## Patentansprüche

1. Wandlervorrichtung (105) für eine Leistungselektronik, wobei die Wandlervorrichtung (105) die folgenden Merkmale aufweist:
Eine Eingangsschnittstelle (110) zum Bereitstellen einer Eingangsspannung und eine Ausgangsschnittstelle (115) zum Bereitstellen einer Ausgangsspannung, und
eine erste Wandlereinheit (120) und eine zweite Wandlereinheit (125), die zum Wandeln der Eingangsspannung in die Ausgangsspannung zwischen die Eingangsschnittstelle (110) und Ausgangsschnittstelle (115) geschaltet sind,
**dadurch gekennzeichnet, dass**
die erste Wandlereinheit (120) und die zweite Wandlereinheit (125) eingangsseitig und/oder ausgangsseitig in Reihe geschaltet sind.

2. Wandlervorrichtung (105) gemäß Anspruch 1, **dadurch gekennzeichnet, dass** die erste Wandlereinheit (120) und die zweite Wandlereinheit (125) eingangsseitig und ausgangsseitig in Reihe geschaltet sind.

3. Wandlervorrichtung (105) gemäß Anspruch 1, **dadurch gekennzeichnet, dass** die erste Wandlereinheit (120) und die zweite Wandlereinheit (125) eingangsseitig in Reihe geschaltet und ausgangsseitig parallelgeschaltet sind.

4. Wandlervorrichtung (105) gemäß Anspruch 1, **dadurch gekennzeichnet, dass** die erste Wandlereinheit (120) und die zweite Wandlereinheit (125) eingangsseitig parallel und ausgangsseitig in Reihe geschaltet sind.

5. Wandlervorrichtung (105) gemäß einem der vorangegangenen Ansprüche, **dadurch gekennzeichnet, dass** die Eingangsschnittstelle (110) einen ersten Eingangsspannungsanschluss (130) und einen zweiten Eingangsspannungsanschluss (135) zum Bereitstellen der Eingangsspannung aufweist, und die Ausgangsschnittstelle (115) einen ersten Ausgangsspannungsanschluss (140) und einen zweiten Ausgangsspannungsanschluss (150) zum Bereitstellen der Ausgangsspannung aufweist, wobei die erste Wandlereinheit (120) einen ersten Wandlereingangsanschluss (155) und einen weiteren ersten Wandlereingangsanschluss (160) aufweist und die zweite Wandlereinheit (125) einen zweiten Wandlereingangsanschluss (165) und einen weiteren zweiten Wandlereingangsanschluss (170) aufweist.

6. Wandlervorrichtung (105) gemäß Anspruch 5, **dadurch gekennzeichnet, dass** der erste Wandlereingangsanschluss (155) mit dem ersten Eingangsspannungsanschluss (130) und der weitere zweite Wandlereingangsanschluss (170) mit dem zweiten Eingangsspannungsanschluss (135) elektrisch leitfähig verbunden ist, und der weitere erste Wandlereingangsanschluss (160) mit dem zweiten Wandlereingangsanschluss (165) elektrisch leitfähig verbunden ist, und zwischen dem ersten Wandlereingangsanschluss (155) und dem weiteren ersten Wandlereingangsanschluss (160) ein erster Zwischenkreiskondensator (C_{1,1}) und zwischen dem zweiten Wandlereingangsanschluss (165) und dem weiteren zweiten Wandlereingangsanschluss (170) ein weiterer erster Zwischenkreiskondensator (C_{1,2}) elektrisch kontaktiert ist.

7. Wandlervorrichtung (105) gemäß Anspruch 5, **dadurch gekennzeichnet, dass** die erste Wandlereinheit (120) einen ersten Wandlerausgangsanschluss (175) und einen weiteren ersten Wandlerausgangsanschluss (180) aufweist und die zweite Wandlereinheit (125) einen zweiten Wandlerausgangsanschluss (185) und einen weiteren zweiten Wandlerausgangsanschluss (190) aufweist, wobei der erste Wandlerausgangsanschluss (175) mit dem ersten Ausgangsspannungsanschluss (140) und der weitere zweite Wandlerausgangsanschluss (190) mit dem zweiten Ausgangsspannungsanschluss (150) elektrisch leitfähig verbunden ist, und der weitere erste Wandlerausgangsanschluss (180) mit dem zweiten Wandlerausgangsanschluss (185) elektrisch leitfähig verbunden ist und zwischen dem ersten Wandlerausgangsanschluss (175) und dem weiteren ersten Wandlerausgangsanschluss (180) ein zweiter Zwischenkreiskondensator (C_{2,1}) und zwischen dem zweiten Wandlerausgangsanschluss (185) und dem weiteren zweiten Wandlerausgangsanschluss (190) ein weiterer zweiter Zwischenkreiskondensator (C_{2,2}) elektrisch kontaktiert ist.

8. Wandlervorrichtung (105) gemäß Anspruch 5, **dadurch gekennzeichnet, dass** die erste Wandlereinheit (120) einen ersten Wandlerausgangsanschluss (175) und einen weiteren ersten Wandlerausgangsanschluss (180) aufweist und die zweite Wandlereinheit (125) einen zweiten Wandlerausgangsanschluss (185) und einen weiteren zweiten Wandlerausgangsanschluss (190) aufweist, wobei der erste Wandlerausgangsanschluss (175) und der zweite Wandlerausgangsanschluss (185) mit dem ersten Ausgangsspannungsanschluss (140) elektrisch leitfähig verbunden sind, und der weitere erste Wandlerausgangsanschluss (180) und der weitere zweite Wandlerausgangsanschluss (190) mit dem zweiten Ausgangsspannungsanschluss (150) elektrisch leitfähig verbunden sind, und/oder zwischen dem ersten Ausgangsspannungsanschluss (140) und dem zweiten Ausgangsspannungsanschluss (150) ein zusätzlicher Zwischenkreiskondensator (C₂) elektrisch kontaktiert ist.

9. Wandlervorrichtung (105) gemäß Anspruch 5, **dadurch gekennzeichnet, dass** der erste Wandlereingangsanschluss (155) und der weitere erste Wandlereingangsanschluss (165) mit dem ersten Eingangsspannungsanschluss (130) elektrisch leitfähig verbunden sind, und der zweite Wandlereingangsanschluss (160) und der weitere zweite Wandlereingangsanschluss (170) mit dem zweiten Eingangsspannungsanschluss (135) elektrisch leitfähig verbunden sind.

10. Wandlervorrichtung (105) gemäß einem der vorangegangenen Ansprüche, **gekennzeichnet durch** eine Steuereinrichtung (192), die dazu ausgebildet ist, um die erste Wandlereinheit (120) und die zweite Wandlereinheit (125) alternierend zu betreiben.

11. Wandlervorrichtung (105) gemäß Anspruch 10, **dadurch gekennzeichnet, dass** die Steuereinrichtung (192) dazu ausgebildet ist, um die erste Wandlereinheit (120) und die zweite Wandlereinheit (125) alternierend mit einer Umschaltfrequenz zu betreiben, die kleiner ist, als eine Betriebsfrequenz der Wandlereinheiten (120, 125).

12. Wandlervorrichtung (105) gemäß einem der Ansprüche 10 bis 11, **dadurch gekennzeichnet, dass** die Steuereinrichtung (192) dazu ausgebildet ist, um die erste Wandlereinheit (120) und die zweite Wandlereinheit (125) alternierend mit einer Überlappungszeit zu betreiben.

13. Wandlervorrichtung (105) gemäß einem der vorangegangenen Ansprüche, **gekennzeichnet durch** zumindest eine dritte Wandlereinheit, die zum Wandeln der Eingangsspannung in die Ausgangsspannung zwischen die Eingangsschnittstelle (110) und Ausgangsschnittstelle (115) geschaltet ist, wobei die dritte Wandlereinheit, erste Wandlereinheit (120) und zweite Wandlereinheit (125) eingangsseitig und/oder ausgangsseitig in Reihe geschaltet sind.

14. Wandlervorrichtung (105) gemäß einem der vorangegangenen Ansprüche, **dadurch gekennzeichnet, dass** die Wandlervorrichtung (105) als DC-DC-Wandler, AC-DC-Wandler, DC-AC-Wandler oder AC-AC-Wandler ausgeformt ist.

15. Verfahren (300) zum Betreiben einer Wandlervorrichtung (105) gemäß einem der Ansprüche 1 bis 14, **dadurch gekennzeichnet, dass** die Wandlereinheiten (120, 125) alternierend betrieben werden.
